# EUROPÄISCHE PATENTSCHRIFT

(11) **EP 3 272 469 B1**
(45) Veröffentlichungstag und Bekanntmachung des Hinweises auf die Patenterteilung: **06.05.2026**
(21) Anmeldenummer: 16179951.5
(22) Anmeldetag: 18.07.2016
(51) Int. Cl.: B25J 9/02, H01R 43/048

(54) **POSITIONIERVORRICHTUNG EINES BEARBEITUNGSMODULS EINER KABELBEARBEITUNGSMASCHINE**
POSITIONING DEVICE OF A PROCESSING MODULE OF A CABLE PROCESSING MACHINE
DISPOSITIF DE POSITIONNEMENT D'UN MODULE OUTIL D'UNE MACHINE DE TRAITEMENT DE CABLE

(43) Veröffentlichungstag der Anmeldung: 24.01.2018
(73) Patentinhaber: Komax Holding AG, 6036 Dierikon (CH)
(72) Erfinder: BERTHER, Adrian, 6322 Hagendorn (CH); MEIER, Luca, 6287 Aesch (CH)
(74) Vertreter: EGLI-EUROPEAN PATENT ATTORNEYS

(56) Entgegenhaltungen:
- EP-A2- 1 032 095
- EP-B1- 0 927 444
- DE-A1- 3 703 009
- US-A- 5 709 025
- US-A1- 2011 132 125

## Beschreibung

Die Erfindung betrifft ein Bearbeitungsmodul einer Kabelbearbeitungsmaschine, welche zum Konfektionieren von Kabeln, insbesondere von Kabelenden dient.

Kabelbearbeitungsmaschinen zum Konfektionieren von Kabeln, insbesondere von Kabelenden im Sinne der vorliegenden Erfindung verfügen typischerweise über mehrere Bearbeitungsmodule, zu denen das zu verarbeitende Kabel durch eine Ausschwenk- und Linearbewegung eines Greifarmes zugeführt wird, beispielswiese zu einer Crimppresse, die zum Ancrimpen einer Steckverbindung an das abisolierte Ende eines elektrischen Verbindungskabels dient. Eine derartige Kabelbearbeitungsmaschine ist beispielsweise aus EP 1 447 888 B1 bekannt. Während sich viele Standardkabel mit maximal zwei Bearbeitungsstationen pro Kabelende bzw. Schwenkarm verarbeiten lassen, sind bei Kabeln mit komplexerem Aufbau, wie beispielsweise Koaxialkabeln, deutlich mehr Bearbeitungsschritte auszuführen. Da aus Platzgründen die Anzahl der Bearbeitungsstationen innerhalb einer Kabelbearbeitungsmaschine zumeist beschränkt ist und die Bearbeitungsmodule mitunter über aufwändige Antriebe verfügen, wurden spezielle Werkzeuge für die Bearbeitungsmodule geschaffen, mit denen sich mehrere Prozessschritte realisieren lassen. So sind beispielsweise Werkzeuge im Einsatz, die für die Konfektionierung eines Koaxialkabels insgesamt drei Prozessschritte ausführen können, etwa das (1) Ancrimpen einer Stützhülse auf den Schirm eines abgemantelten Koaxialkabels, das (2) Umlegen des Schirms über die Stützhülse und das (3) Ancrimpen eines Kontaktteiles an den abzuisolierenden Innenleiter des Koaxialkabels. Dieses Werkzeug hat die Eigenschaft, dass für jeden der drei Prozessschritt (1) - (3) eine unterschiedliche Positionierung des Kabels relativ zum Bearbeitungsmodule notwendig ist, weil das Bearbeitungsmodul für jeden der Prozessschritte unterschiedliche Bearbeitungspositionen bzw. Bearbeitungsstationen aufweist. So kann es etwa vorgesehen sein, dass das (1) Ancrimpen der Stützhülse auf den Schirm und das (2) Umlegen des Schirms an zwei vertikal voneinander beabstandeten Bearbeitungspositionen vorgenommen wird und dass das Kabel nach dem (2) Umlegen des Schirms mithilfe des Schwenkgreifarms zusätzlich für das (3) Ancrimpen eines Kontaktteiles an den Innenleiter in einer horizontalen Ebenen zu einer zweiten Crimpeinrichtung geschwenkt wird. In der Regel sind die unterschiedlichen Bearbeitungspositionen auf eine gleichbleibende Orientierung der Längsachse des zu bearbeitenden Kabels ausgelegt und entsprechend angeordnet. So sind im vorliegenden Beispiel alle Werkzeugstationen für die Prozessschritt (1) - (3) parallel zu einer bestimmten Lage der Kabellängsachse ausgerichtet. Durch das Verschwenken des Kabels nach dem Umlegen des Schirms ergibt sich dann jedoch für den Prozessschritt (3) eine Änderung der Winkellage des Kabels und damit eine Lageabweichung der Kabellängsachse zur eigentlich vorgesehenen, optimalen Lage des Kabels relativ zur zweiten Crimpeinrichtung. Eine ähnliche Problematik liegt im Hinblick auf die Prozessschritte (1) und (2) bei der Kabelposition in vertikaler Richtung vor.

Bisher gebräuchliche Kabelbearbeitungsmodule, insbesondere Crimppressen verfügen üblicherweise über eine von Hand zu betätigende Höhenverstellung, mit der die Presse angehoben und abgesenkt werden kann. Diese Verstellung dient vornehmlich dazu, die bei Verwendung verschiedener Crimpwerkzeuge auftretenden unterschiedlichen Ambosshöhen auszugleichen. Die Höhenverstellung erlaubt es jedoch nicht, die Pressenposition während der Bearbeitung zu verstellen.

Wie beschrieben, liegen bei dem Werkzeug gemäss obigem Beispiel die Bearbeitungspositionen für die Prozessschritte (1) und (2) auf verschiedenen horizontalen Ebenen. Zusätzlich muss das Kabel bei beiden Crimpprozessen (1) und (3) abgesenkt werden, wie dies etwa in EP 2 775 573 B1 beschrieben ist. Ungeachtet der Schwenkproblematik könnte das Bearbeitungsmodul im vorliegenden Beispiel hierzu in der Kabelbearbeitungsmaschine so platziert werden, dass das Kabel in der Ebene des Prozessschrittes (2) läge und dass die beiden Crimp-Positionen (1) und (3) durch unterschiedliche Absenkbewegungen des Kabels erreicht würden. Dies ist technisch allerdings nur mit grossem Aufwand zu realisieren und kann je nach Konstruktion der Maschine ebenfalls zu Winkelfehlern führen. Alternativ könnte das Teil-Problem der vertikalen Positionierung mit einem programmgesteuert absenkbaren Kabelgreifer gelöst werden, wie er etwa in EP 2 174 390 B1 beschrieben wird. Eine derartige Vorrichtung ist jedoch ebenfalls technisch sehr aufwändig.

Um die Problematik der Winkelabweichung beim Verschwenken zu lösen, könnte das Werkzeug so konstruiert werden, dass die zweite Crimpeinrichtung - angepasst an die verschwenkte Kabelposition - schräg angeordnet ist. Eine solche Konstruktion wäre jedoch wiederum technisch sehr aufwändig und passte überdies nur zu einem bestimmten Schwenkradius der Maschine. Alternativ könnte die Verarbeitung auf einer Transfermaschine, wie in EP 1 073 163 B1 beschrieben, durchgeführt werden, mit welcher das Kabel frei zum Werkzeug positioniert werden könnte, die jedoch wesentlich teurer ist als andere Kabelbearbeitungsmaschinen.

Das Dokument EP 1 032 095 A2 beschreibt ein Verfahren und eine Einrichtung zur Bearbeitung und Verdrillung eines Leiterpaares. Ein Transfermodul zum Transferieren des Leiterpaares weist ein Greiferpaar auf, mit welchem die Leiterenden des Leiterpaares festgehalten werden. Der horizontale Abstand der beiden Greifer des Greiferpaars lässt sich verändern, wodurch die Leiterenden, nachdem sie von dem Greiferpaar übernommen wurden, auf einen verringerten Leiterabstand gebracht werden können. Die beiden Greiferpaare sind außerdem am Transfermodul in einer Vertikalrichtung verschieblich angeordnet.

Das Dokument US 5,709,025 beschreibt eine Vorrichtung zum Verdrahten eines Verbinders mit einer Mehrzahl von Kontakten. Ein Greifer weist eine feststehende obere Greiferbacke und eine bewegliche untere Greiferbacke auf, zwischen welche ein Kabel geklemmt werden kann. Der Greifer ist in drei linearen Raumrichtungen x, y, z in Richtung des feststehenden Verbinders bewegbar.

Das Dokument EP 0 927 444 B1 offenbart eine Vorrichtung zum Bearbeiten von Kabeln, beispielsweise mit einem Crimpwerkzeug, das sich in mindestens einem Freiheitsgrad linear bewegen kann.

Die Aufgabe der vorliegenden Erfindung besteht somit darin, die oben beschriebene Problematik der Kabelpositionierung bei Bearbeitungsmodulen von Kabelbearbeitungsmaschinen zu lösen, insbesondere bei solchen Bearbeitungsmodulen mit mehreren Bearbeitungspositionen.

Diese Aufgabe wird gelöst durch ein Bearbeitungsmodul nach Anspruch 1 und eine Kabelbearbeitungsmaschine nach Anspruch 11. Vorteilhafte Ausgestaltungen der Erfindung sind Gegenstand der abhängigen Ansprüche.

Die Positioniervorrichtung des erfindungsgemässen Bearbeitungsmoduls ist für die Positionierung eines Bearbeitungsmoduls einer Kabelbearbeitungsmaschine bestimmt und zeichnet sich dadurch aus, dass sie wenigstens eine erste Verschiebeeinrichtung zum Verschieben des Bearbeitungsmoduls relativ zum zu bearbeitenden Kabel entlang einer ersten Achse quer zur Längsachse des zu bearbeitenden Kabels umfasst und ferner wenigstens eine zweite Verschiebeeinrichtung zum Verschieben des Bearbeitungsmoduls relativ zum zu bearbeitenden Kabel entlang einer zweiten Achse quer zur Längsachse des zu bearbeitenden Kabels und quer zur ersten Achse.

Bevorzugt sind die erste Achse und/oder die zweite Achse senkrecht zur Längsachse des zu bearbeitenden Kabels ausgerichtet und vorzugsweise auch senkrecht relativ zueinander. Insbesondere kann es vorgesehen sein, dass sich die erste Achse horizontal und die zweite Achse vertikal erstreckt. In dieser bevorzugten Ausführungsform erlaubt die Positioniervorrichtung ein Verschieben des Bearbeitungsmoduls in einer Ebene senkrecht zur Längsachse des zu bearbeitenden Kabels.

Durch die beiden Verschiebeeinrichtungen quer zur Längsachse des Kabels wird erreicht, dass das Bearbeitungsmodul relativ zum zu bearbeitenden Kabel in jeweils verschiedene Bearbeitungspositionen entlang zweier Achsen beliebig verstellt werden kann, so dass nunmehr nicht mehr das Kabel - wie bisher im Stand der Technik - relativ zu einem ortsfesten Bearbeitungsmodul quer zu seiner Längsachse positioniert werden muss. Vielmehr kann das Kabel eine gleichbleibende Orientierung/Lage quer zu seiner Längsachse beibehalten und braucht gegebenenfalls nur für bestimmte Bearbeitungsprozesse - wenn überhaupt - entlang seiner Längsachse verschoben werden. Hierdurch entfällt insbesondere die eingangs beschriebene Problematik der Winkelabweichung, weil auf ein Verschwenken des Kabels relativ zum Bearbeitungsmodul verzichtet werden kann. Zudem können dadurch von Vorteil sämtliche Bearbeitungspositionen bzw. Werkzeuge des Bearbeitungsmoduls in technisch einfach zu realisierender Art und Weise parallel zur gleichbleibenden Orientierung/Lage der Kabellängsachse ausgerichtet sein.

Vorzugsweise ist die Positioniereinrichtung derart ausgebildet, dass die Verschiebebewegung entlang der ersten oder der zweiten Achse entlang einer Bewegungsrichtung eines Werkzeuges des Bearbeitungsmoduls orientiert, das mit Hilfe der Positioniereinrichtung relativ zum zu bearbeitenden Kabel positionierbar ist. So kann es beispielsweise vorgesehen sein, dass mit der erfindungsgemässen Positioniervorrichtung ein Bearbeitungsmodul mit einem Crimpwerkzeug positioniert werden kann, wobei das Crimpwerkzeug einen Crimpamboss und eine Crimppresse umfasst, welche sich in Richtung des Crimpamboss, beispielsweise in vertikaler Richtung, bewegen lässt. In diesem Fall kann es gemäss einer bevorzugten Ausführungsform der erfindungsgemässen Positioniervorrichtung vorgesehen sein, dass etwa die zweite Achse der zweiten Verschiebeeinrichtung parallel zur Bewegungsrichtung der Crimppresse orientiert ist. Dadurch lässt sich ein deutlich verbesserter Crimpprozess erreichen, da der eingangs beschriebene Verfahrweg parallel zur Bewegungsrichtung der Crimppresse beim Absenken eines Kabelgreifers, der das zu bearbeitenden Kabel hält, aufgrund der nunmehr möglichen Positionierbarkeit des Bearbeitungsmoduls relativ zum Kabel stark reduziert werden kann. Ist die zweite Achse bzw. Bewegungsrichtung der Crimppresse vertikal orientiert, so kann in vorteilhafter Weise über die zweite Verschiebeeinrichtung der Positioniervorrichtung eine Höhenverstellbarkeit des Bearbeitungsmoduls erreicht werden.

Selbstverständlich ist es denkbar, dass die Positioniervorrichtung neben der ersten und zweiten Verschiebeeinrichtung zusätzlich auch noch wenigstens eine dritte Verschiebeeinrichtung zum Verschieben des Bearbeitungsmoduls relativ zum Kabel entlang einer dritten Achse quer zur ersten und zweiten Achse umfasst. Bevorzugt erstreckt sich die dritte Achse parallel zur Längsachse des zu bearbeitenden Kabels. Hierdurch kann insbesondere eine variable Zustellung des oder der Werkzeuge des Bearbeitungsmoduls an verschiedene Längsabschnitte des zu bearbeitenden Kabels erreicht werden.

Gemäss der Erfindung ist es vorgesehen, dass die erste Verschiebeeinrichtung im bewegten System der zweiten Verschiebeeinrichtung angeordnet ist, wobei das Bearbeitungsmodul im bewegten System der ersten Verschiebeeinrichtung anordenbar ist. Umgekehrt ist auch denkbar, dass die zweite Verschiebeeinrichtung im bewegten System der ersten Verschiebeeinrichtung angeordnet ist, wobei das Bearbeitungsmodul im bewegten System der zweiten Verschiebeeinrichtung anordenbar ist. In diesen beiden Fällen sind die erste und die zweite Verschiebeeinrichtung jeweils miteinander gekoppelt. So kann beispielsweise vorgesehen sein, dass die erste Verschiebeeinrichtung zum Verschieben entlang einer horizontalen Achse ausgebildet ist und auf ihr die zweite Verschiebeeinrichtung angeordnet ist, welche zum Höhenverstellen entlang einer Vertikalen ausgebildet ist. Im Ergebnis bewirkt somit eine Verschiebung entlang der ersten Achse stets eine horizontale Bewegung der zweiten Verschiebeeinrichtung.

Gemäss einer besonders bevorzugten Ausgestaltung der Erfindung kann die erste Verschiebeeinrichtung und/oder die zweite Verschiebeeinrichtung wenigstens eine, insbesondere geradlinige Linearführungseinrichtung aufweisen. Denkbar ist beispielsweise, dass die wenigstens eine Linearführungseinrichtung wenigstens eine Kugellager-, Kreuzrollenlager-, Umwälzlager- oder Schwalbenschwanz-Führung umfasst.

Gemäss einer weiteren vorteilhaften Ausgestaltung der Erfindung kann die erste oder die zweite Verschiebeeinrichtung wenigstens eine Hubeinrichtung aufweisen. Bevorzugt umfasst die Hubeinrichtung wenigstens ein Hubgetriebe, insbesondere wenigstens ein Hubgetriebe mit wenigstens einer Hubstange. Vorzugsweise ist das Hubgetriebe selbsthemmend ausgebildet, etwa als Schneckenradgetriebe, um zu verhindern, dass das Gewicht des Bearbeitungsmoduls eine ungewollte Verschiebung in vertikaler Richtung bewirkt. Um die Hubbewegung der Hubeinrichtung zu führen, kann die Hubeinrichtung ferner wenigstens eine mit einer Linearführungsbuchse verschiebbar geführte Führungsstange oder Führungssäule aufweisen. Vorzugsweise sind mehrere solcher Führungssäulen bzw. Führungsstangen vorgesehen, die jeweils in einer Linearführungsbuchse verschiebbar geführt sind. Die wenigstens eine Führungsstange bzw. Führungssäule kann beispielsweise einen runden Querschnitt aufweisen. Alternativ kann die Führungsstange oder Führungssäule auch einen polyedrischen, insbesondere dreieckigen oder viereckigen Querschnitt aufweisen. Der Querschnitt der Linearführungsbuchse ist entsprechend komplementär ausgebildet. Von Vorteil ist über eine entsprechende Ausgestaltung des Querschnitts der Führungssäule/Führungsstange und des komplementär ausgebildeten Querschnitts der Linearführungsbuchse eine Verdrehsicherung des bewegten Systems zum stationären System der Hubeinrichtung realisiert. So kann beispielsweise die Führungsstange/Führungssäule - und entsprechend komplementär die Linearführungsbuchse - beispielsweise einen polyedrischen oder abschnittsweise abgeflachten Querschnitt aufweisen, um neben der Führung entlang der Verschiebeachse der Hubeinrichtung gleichzeitig auch eine Verdrehsicherung der Positioniervorrichtung gegen ein ungewolltes Verdrehen um die Verschiebeachse der Hubeinrichtung zu bewirken.

Nach einer weiteren vorteilhaften Ausgestaltung der Erfindung kann die erste Verschiebeeinrichtung und oder die zweite Verschiebeeinrichtung ein Spindelgetriebe, insbesondere ein Kugelgewindetrieb oder ein Rollengewindetrieb, aufweisen. Zusätzlich oder alternativ können die erste und/oder die zweite Verschiebeeinrichtung auch ein Zahnriemengetriebe umfassen.

Die erste und die zweite Verschiebeeinrichtung im Sinne der vorliegenden Erfindung sind insbesondere aktuatorisch angetrieben, vorzugsweise mechanisch oder elektromechanisch. Aktuatorisch im Sinne der vorliegenden Erfindung bedeutet, dass die erste und die zweite Verschiebeeinrichtung jeweils wenigstens eine Aktuatoreinrichtung aufweisen, die Signale, beispielsweise von einer Steuerung ausgehend, in eine mechanische Bewegung umwandelt. Zur Erzeugung einer entsprechenden Verschiebebewegung können die erste und/oder die zweite Verschiebeeinrichtung insbesondere eine pneumatische, magnetische oder elektromotorische Aktuatoreinrichtung aufweisen. Vorzugsweise kommen Linear-Aktuatoreinrichtungen oder Dreh-Aktuatoreinrichtungen in Betracht. Denkbar sind beispielsweise Piezo-Aktuatoren, Linearmotoren, Schrittmotoren (Steppermotoren), Servomotoren oder Pneumatikzylinder.

Nach einer weiteren bevorzugten Ausgestaltung der Erfindung weist die Positioniervorrichtung ein Basiselement, insbesondere eine Basisplatte auf, auf der die erste und die zweite Verschiebeeinrichtung angeordnet sind. Hierdurch wird die Stabilität und Standsicherheit der Positioniervorrichtung auf besonders einfach zu realisierende Art und Weise gewährleistet.

Im Weiteren kann gemäss einer vorteilhaften Ausgestaltung der Erfindung vorgesehen sein, dass die Positioniervorrichtung ein Aufnahmeelement, insbesondere eine Aufnahmeplatte zur Aufnahme des Bearbeitungsmoduls aufweist, die mittels der ersten und der zweiten Verschiebeeinrichtung entlang der ersten und zweiten Achse relativ zum zu bearbeitenden Kabel verschiebbar ist.

Gemäss einer weiteren vorteilhaften Ausgestaltung der Erfindung sind die Verschiebebewegungen der gesamten Positioniervorrichtung programmgesteuert. Hierzu kann es vorgesehen sein, dass die Positioniervorrichtung eine Steuereinrichtung zum Steuern der Verschiebebewegungen der ersten und zweiten Verschiebeeinrichtung aufweist. Diese Steuereinrichtung ist bevorzugt mit einer Steuerung des Bearbeitungsmoduls und/oder der Kabelbearbeitungsmaschine wirkverbunden bzw. wirkverbindbar oder sogar darin integriert bzw. integrierbar. Ferner betrifft die Erfindung eine Kabelbearbeitungsmaschine, welche wenigstens ein Bearbeitungsmodul mit wenigstens einer erfindungsgemässen Positioniereinrichtung umfasst.

Weitere Ziele, Vorteile und Anwendungsmöglichkeiten der vorliegenden Erfindung ergeben sich aus der nachfolgenden Beschreibung eines Ausführungsbeispiels der Erfindung sowie anhand der beigefügten Figuren.

Es zeigen:
- Fig. 1: perspektivische Ansicht eines möglichen Ausführungsbeispiels einer erfindungsgemässen Positioniervorrichtung, auf der ein Bearbeitungsmodul einer Kabelbearbeitungsmaschine angeordnet ist;
- Fig. 2: Seitenansicht der Positioniervorrichtung gemäss Fig. 1 ohne Bearbeitungsmodul; und
- Fig. 3: perspektivische Ansicht der Positioniervorrichtung gemäss Fig. 1 ohne Aufnahmeplatte und ohne Bearbeitungsmodul.

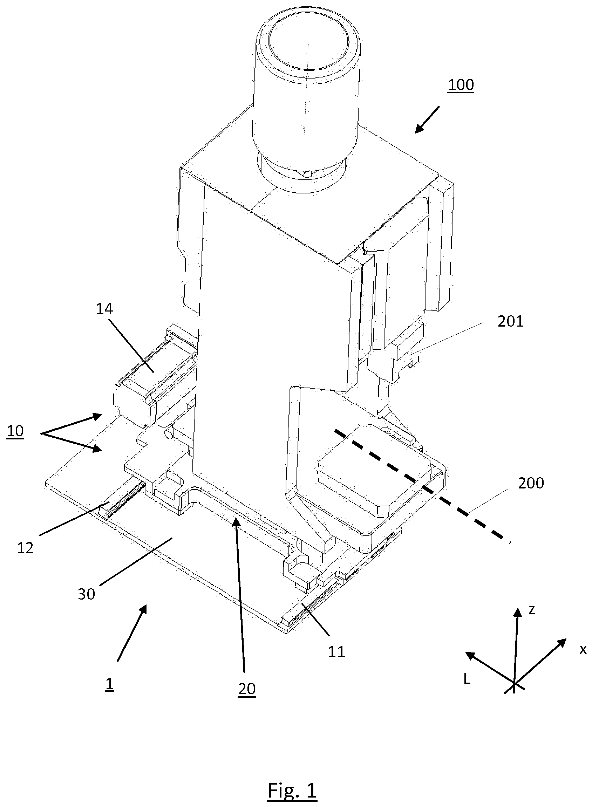

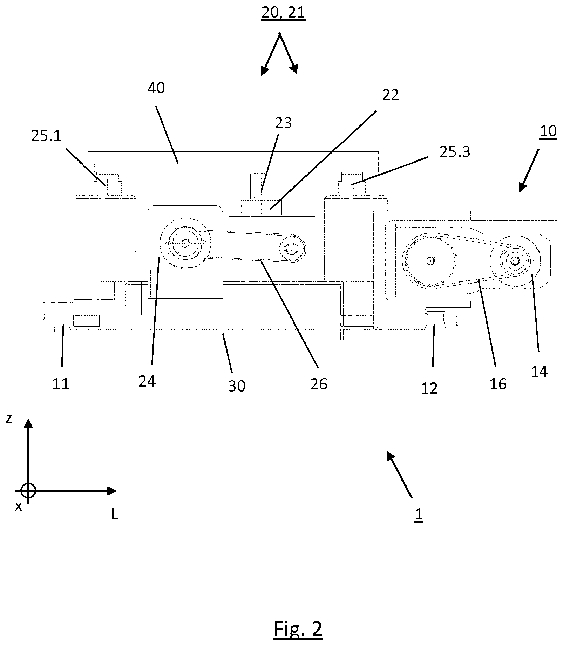

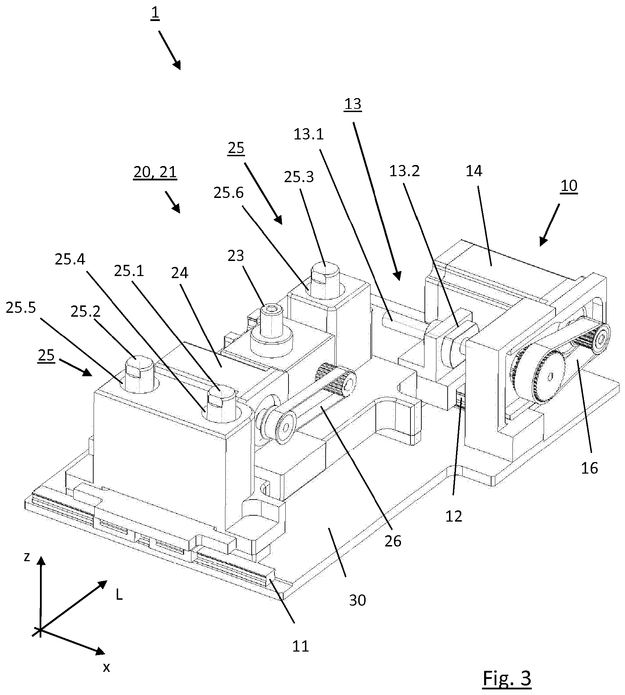

Die Fig. 1-3 zeigen ein mögliches Ausführungsbeispiel einer erfindungsgemässen Positioniervorrichtung 1, die zum Verschieben eines Bearbeitungsmoduls 100 einer (hier nicht gezeigten) Kabelbearbeitungsmaschine relativ zu einem von dem Bearbeitungsmodul 100 zu bearbeitenden bzw. zu konfektionierenden Kabel 200 dient. Das zu bearbeitende bzw. zu konfektionierende Kabel 200 ist es schematisch in Fig. 1 durch eine gestrichelte Linie angedeutet.

Erfindungsgemäss umfasst die Positioniervorrichtung 1 wenigstens eine erste Verschiebeeinrichtung 10 zum Verschieben des Bearbeitungsmoduls 100 relativ zum zu bearbeitenden Kabel 200 entlang einer ersten, horizontalen Achse X senkrecht zur Längsachse L des zu bearbeitenden Kabels 200. Im Weiteren umfasst die Positioniervorrichtung 1 wenigstens eine zweite Verschiebeeinrichtung 20 zum Verschieben des Bearbeitungsmoduls 100 relativ zum zu bearbeitenden Kabel 200 entlang einer zweiten, vertikalen Achse Z senkrecht zur Längsachse L und senkrecht zur ersten Achse X. Hierdurch wird erreicht, dass das Bearbeitungsmodul 100 relativ zum zu bearbeitenden Kabel 200 in einer Ebene senkrecht zur Längsachse L des Kabels 200 frei positioniert werden kann, um verschiedene Bearbeitungspositionen bzw. Werkzeuge des Bearbeitungsmoduls (hier nicht dargestellt) an das zu konfektionierende Kabel heranzuführen, so dass nunmehr nicht mehr das Kabel 200 - wie bisher im Stand der Technik - relativ zu einem ortsfesten Bearbeitungsmodul quer zu seiner Längsachse positioniert werden muss. Vielmehr kann das Kabel 200 eine gleichbleibende Orientierung/Lage quer zu seiner Längsachse L beibehalten und braucht gegebenenfalls nur für bestimmte Bearbeitungsprozesse - wenn überhaupt - entlang seiner Längsachse verschoben werden. Selbstverständlich ist es jedoch möglich, dass das Kabel 200 zusätzlich über eine Greifeinrichtung (hier nicht dargestellt) zusätzlich quer zu seiner Längsachse verschoben werden kann.

Bei dem vorliegend in den Fig. 1-3 gezeigten Ausführungsbeispiel umfasst die Positioniervorrichtung 1 eine Basisplatte 30, auf der zwei Linearführungen 11, 12 angeordnet sind, welche in Richtung der ersten Achse x verlaufen und die erste Verschiebeeinrichtung 10 bilden. Auf diesen beiden Linearführungen 11, 12 ist im Weiteren eine Hubeinrichtung 21 angeordnet, die über die beiden Linearführungen 11, 12 entlang der ersten Achse x horizontal verschiebbar ist und die zweite Verschiebeeinrichtung 20 bildet. Die Hubeinrichtung 21 verfügt über insgesamt drei vertikaler Linearführungen 25. Jede der drei vertikalen Linearführungen 25 umfasst eine in einer Linearführungsbuchse 25.4, 25.5, 25.6 verschiebbar geführte Führungsstange 25.1, 25.2, 25.3, die gemeinsam eine Aufnahmeplatte 40 tragen, welche zur Aufnahme des zu positionieren Bearbeitungsmoduls 200 dient. Um die Aufnahmeplatte 40 und damit das Bearbeitungsmodul 200 in vertikaler Richtung in der Höhe zu verstellen, umfasst die Hubeinrichtung 21 ein selbsthemmendes Hubgetriebe 22, etwa ein Schneckenradgetriebe, mit einer in der zweiten Richtung z verstellbaren Hubstange 23, die von unten an der Aufnahmeplatte 40 angreift.

Zum Erzeugen der Verschiebebewegungen der ersten und zweiten Verschiebeeinrichtung 10, 20 verfügt die Positioniervorrichtung 1 über einen ersten und zweiten Servomotor 14, 15. Der erste Servomotor 14 ist über ein Zahnriemengetriebe 16 mit einem Spindelgetriebe 13 verbunden. Das Spindelgetriebe 13 umfasst eine vom ersten Servomotor 14 drehend angetriebene Spindel 13.1 sowie eine Spindelmutter 13.2, die sich im bewegten System der ersten Verschiebeeinrichtung 10 befindet und mit der Hubeinrichtung 21 verbunden ist, so dass eine Drehbewegung des ersten Servomotors 14 eine Linearverschiebung der ersten Verschiebeeinrichtung 10 und damit der Hubeinrichtung 21, der Aufnahmeplatte 40 und letztlich des Bearbeitungsmoduls 100 entlang der ersten Achse x bewirkt. Der erste Servomotor 14, das Zahnriemengetriebe 16 und die Spindel 13.1 sind entsprechend auf der Grundplatte 30 angeordnet bzw. damit verbunden. Der zweite Servomotor 24 dient als Hubmotor für die Hubeinrichtung 21 und ist ebenfalls über ein Zahnriemengetriebe 26 mit dem Hubgetriebe 22 wirkverbunden, so dass eine Drehbewegung des Hubmotors 24 eine vertikale Auf- und Abbewegung der Hubstange 23 und damit der Aufnahmeplatte 40 und des darauf angeordneten Bearbeitungsmoduls 100 bewirkt. Die jeweiligen Verschiebe- bzw. Positionierbewegungen der ersten und zweiten Verschiebeeinrichtung 10, 20 werden von einer hier nicht gezeigten Steuerung in Abhängigkeit der durchzuführenden Bearbeitungsprozesse des Bearbeitungsmoduls 100 gesteuert. Von Vorteil ist die Steuerung direkt mit den Motoren 14, 20 der ersten und zweiten Verschiebeeinrichtung 10, 20 wirkverbunden. Um die Verschiebe- bzw. Positionierbewegungen der ersten und zweiten Verschiebeeinrichtung 10, 20 entlang der ersten und zweiten Achse x, y zu regeln, können zudem (hier nicht dargestellte) Positionserkennungsmittel oder für jede Achse je wenigstens eine Positionserkennungseinrichtung oder wenigstens eine gemeinsame Positionserkennungseinrichtung vorgesehen sein, die dazu ausgebildet ist/sind, die jeweilige Position der ersten und zweiten Verschiebeeinrichtung 10, 20 und/oder des Bearbeitungsmoduls 100 entlang der ersten bzw. zweiten Achse x, y zu erfassen und an die Steuerung zu übermitteln.

## Patentansprüche

1. Bearbeitungsmodul (100) einer Kabelbearbeitungsmaschine zum Konfektionieren eines Kabels, mit wenigstens einer Positioniervorrichtung (1) wobei das Bearbeitungsmodul ein Crimpwerkzeug umfasst, wobei die Positioniervorrichtung eine erste Verschiebeeinrichtung (10) zum Verschieben des Bearbeitungsmoduls (100) relativ zum zu bearbeitenden Kabel (200) entlang einer ersten, insbesondere horizontalen Achse (x) quer, vorzugsweise senkrecht zur Längsachse (L) des zu bearbeitenden Kabels (200) und eine zweite Verschiebeeinrichtung (20) zum Verschieben des Bearbeitungsmoduls (100) relativ zum zu bearbeitenden Kabel (200) entlang einer zweiten, insbesondere vertikalen Achse (z) quer, vorzugsweise senkrecht zur Längsachse (L) des zu bearbeitenden Kabels (200) und quer, vorzugsweise senkrecht zur ersten Achse (x) umfasst ,
wobei die erste Verschiebeeinrichtung (10) im bewegten System der zweiten Verschiebeeinrichtung (20) angeordnet ist, wobei das Bearbeitungsmodul (100) im bewegten System der ersten Verschiebeeinrichtung (10) anordenbar ist; oder wobei die zweite Verschiebeeinrichtung (20) im bewegten System der ersten Verschiebeeinrichtung (10) angeordnet ist, wobei das Bearbeitungsmodul (100) im bewegten System der zweiten Verschiebeeinrichtung (20) anordenbar ist.

2. Bearbeitungsmodul (100) nach Anspruch 1, **dadurch gekennzeichnet, dass** die erste Verschiebeeinrichtung (10) und/oder die zweite Verschiebeeinrichtung (20) wenigstens eine Linearführungseinrichtung (11, 12, 25), insbesondere wenigstens eine Kugellager-, Kreuzrollenlager-, Umwälzlager- oder Schwalbenschwanz-Führung, aufweist.

3. Bearbeitungsmodul (100) nach einem der vorhergehenden Ansprüche, **dadurch gekennzeichnet, dass** die erste Verschiebeeinrichtung (10) oder die zweite Verschiebeeinrichtung (20) wenigstens eine Hubeinrichtung (21) aufweist.

4. Bearbeitungsmodul (100) nach Anspruch 3, **dadurch gekennzeichnet, dass** die Hubeinrichtung (21) wenigstens ein vorzugsweise selbsthemmendes Hubgetriebe (22), insbesondere wenigstens ein Hubgetriebe (22) mit wenigstens einer Hubstange (23), aufweist.

5. Bearbeitungsmodul (100) nach Anspruch 3 oder 4, **dadurch gekennzeichnet, dass** die Hubeinrichtung (21) wenigstens eine in einer Linearführungsbuchse (25.4, 25.5, 25.6) verschiebbar geführte Führungsstange oder Führungssäule (25.1, 25.2, 25.3), aufweist.

6. Bearbeitungsmodul (100) nach einem der vorhergehenden Ansprüche, **dadurch gekennzeichnet, dass** die erste Verschiebeeinrichtung (10) und/oder die zweite Verschiebeeinrichtung (20) ein Spindelgetriebe (13), insbesondere ein Kugelgewindetrieb oder ein Rollengewindetrieb, und/oder ein Zahnriemengetriebe (16, 26) umfasst.

7. Bearbeitungsmodul (100) nach einem der vorhergehenden Ansprüche, **dadurch gekennzeichnet, dass** die erste Verschiebeeinrichtung (10) und/oder die zweite Verschiebeeinrichtung (20) zur Erzeugung einer Verschiebebewegung eine pneumatische, magnetische oder elektromotorische Aktuatoreinrichtung (14, 24), insbesondere Linear-Aktuatoreinrichtung oder Dreh-Aktuatoreinrichtung, aufweist, vorzugsweise einen Piezo-Aktuator, einen Linearmotor, einen Schrittmotor, einen Servomotor oder einen Pneumatikzylinder.

8. Bearbeitungsmodul (100) nach einem der vorhergehenden Ansprüche, **dadurch gekennzeichnet, dass** die Positioniervorrichtung (1) ein Basiselement (30), insbesondere eine Basisplatte, aufweist, auf der die erste und die zweite Verschiebeeinrichtung (10, 20) angeordnet sind.

9. Bearbeitungsmodul (100) nach einem der vorhergehenden Ansprüche, **dadurch gekennzeichnet, dass** die Positioniervorrichtung (1) ein Aufnahmeelement (40), insbesondere eine Aufnahmeplatte, zur Aufnahme des Bearbeitungsmoduls (100) aufweist, die mittels der ersten und der zweiten Verschiebeeinrichtung (10, 20) entlang der ersten und zweiten Achse (x, z) relativ zum zu bearbeitenden Kabel (200) verschiebbar ist.

10. Bearbeitungsmodul (100) nach einem der vorhergehenden Ansprüche, **dadurch gekennzeichnet, dass** die Positioniervorrichtung (1) eine Steuereinrichtung zum Steuern der Verschiebebewegungen der ersten und zweiten Verschiebeeinrichtung (10, 20) aufweist.

11. Kabelbearbeitungsmaschine zum Konfektionieren eines Kabels umfassend wenigstens ein Bearbeitungsmodul (100) mit wenigstens einer Positioniervorrichtung (1) nach einem der vorhergehenden Ansprüche.

## Claims

1. A processing module (100) of a cable processing machine for manufacturing a cable, having at least one positioning device (1), wherein the processing module comprises a crimping tool, wherein the positioning device comprises a first displacement apparatus (10) for displacing the processing module (100) relative to the cable (200) to be processed along a first, in particular horizontal axis (x) transversely, preferably perpendicularly to the longitudinal axis (L) of the cable (200) to be processed, and a second displacement apparatus (20) for displacing the processing module (100) relative to the cable (200) to be processed along a second, in particular vertical axis (z) transversely, preferably perpendicularly to the longitudinal axis (L) of the cable (200) to be processed, and transversely, preferably perpendicularly to the first axis (x),
wherein the first displacement apparatus (10) is arranged in the moved system of the second displacement apparatus (20), wherein the processing module (100) can be arranged in the moved system of the first displacement apparatus (10); or wherein the second displacement apparatus (20) is arranged in the moved system of the first displacement apparatus (10), wherein the processing module (100) can be arranged in the moved system of the second displacement apparatus (20).

2. The processing module (100) according to Claim 1, **characterized in that** the first displacement apparatus (10) and/or the second displacement apparatus (20) has at least one linear guide apparatus (11, 12, 25), in particular at least one ball-bearing, crossed-roller-bearing or dovetail guide.

3. The processing module (100) according to any one of the preceding claims, **characterized in that** the first displacement apparatus (10) or the second displacement apparatus (20) has at least one lifting apparatus (21).

4. The processing module (100) according to Claim 3, **characterized in that** the lifting apparatus (21) has at least one preferably self-locking lifting gear mechanism (22), in particular at least one lifting gear mechanism (22) having at least one lifting rod (23) .

5. The processing module (100) according to Claim 3 or 4, **characterized in that** the lifting apparatus (21) has at least one guide rod or guide pillar (25.1, 25.2, 25.3) that is guided in a displaceable manner in a linear guide bush (25.4, 25.5, 25.6).

6. The processing module (100) according to any one of the preceding claims, **characterized in that** the first displacement apparatus (10) and/or the second displacement apparatus (20) comprises a spindle gear mechanism (13), in particular a ball screw drive or a roller screw drive, and/or a toothed belt gear mechanism (16, 26).

7. The processing module (100) according to any one of the preceding claims, **characterized in that** the first displacement apparatus (10) and/or the second displacement apparatus (20) has a pneumatic, magnetic or electromotive actuator apparatus (14, 24), in particular linear actuator apparatus or rotary actuator apparatus, for generating a displacement movement, preferably a piezo actuator, a linear motor, a stepping motor, a servomotor or a pneumatic cylinder.

8. The processing module (100) according to any one of the preceding claims, **characterized in that** the positioning device (1) has a base element (30), particularly a base plate, on which the first and the second displacement apparatus (10, 20) are arranged.

9. The processing module (100) according to any one of the preceding claims, **characterized in that** the positioning device (1) has a mounting element (40), particularly a mounting plate, for mounting the processing module (100), which can be displaced along the first and second axis (x, z) relative to the cable (200) to be processed by means of the first and the second displacement apparatus (10, 20) .

10. The processing module (100) according to any one of the preceding claims, **characterized in that** the positioning device (1) has a control apparatus for controlling the displacement movements of the first and second displacement apparatus (10, 20).

11. A cable processing machine for manufacturing a cable comprising at least one processing module (100) having at least one positioning device (1) according to any one of the preceding claims.

## Revendications

1. Module de traitement (100) d'une machine à traiter les câbles pour confectionner un câble, avec au moins un dispositif de positionnement (1), sachant que le module de traitement comprend un outil de sertissage, sachant que le dispositif de positionnement comprend un premier dispositif de déplacement (10) pour déplacer le module de traitement (100) par rapport au câble à traiter (200) le long d'un premier axe en particulier horizontal (x) transversalement, de préférence perpendiculairement à l'axe longitudinal (L) du câble à traiter (200) et un deuxième dispositif de déplacement (20) pour déplacer le module de traitement (100) par rapport au câble à traiter (200) le long d'un deuxième axe en particulier vertical (z) transversalement, de préférence perpendiculairement à l'axe longitudinal (L) du câble à traiter (200) et transversalement, de préférence perpendiculairement au premier axe,
sachant que le premier dispositif de déplacement (10) est disposé dans le système déplacé du deuxième dispositif de déplacement (20), sachant que le module de traitement (100) peut être disposé dans le système déplacé du premier dispositif de déplacement (10) ou sachant que le deuxième dispositif de déplacement (20) est disposé dans le système déplacé du premier dispositif de déplacement (10), sachant que le module de traitement (100) peut être disposé dans le système déplacé du deuxième dispositif de déplacement (20).

2. Module de traitement (100) selon la revendication 1, **caractérisé en ce que** le premier dispositif de déplacement (10) et/ou le deuxième dispositif de déplacement (20) comporte un système de guidage linéaire (11, 12, 25), en particulier au moins un guidage à roulements à billes, à roulements à rouleaux croisés, à roulements de recirculation ou à queue d'aronde.

3. Module de traitement (100) selon l'une quelconque des revendications précédentes, **caractérisé en ce que** le premier dispositif de déplacement (10) ou le deuxième dispositif de déplacement (20) comporte au moins un système de levage (21).

4. Module de traitement (100) selon la revendication 3, **caractérisé en ce que** le système de levage (21) comporte au moins un mécanisme de levage de préférence autobloquant (22), en particulier au moins un mécanisme de levage (22) avec au moins une tige de levage (23).

5. Module de traitement (100) selon la revendication 3 ou 4, **caractérisée en ce que** le système de levage (21) comporte au moins une tige de guidage ou colonne de guidage (25.1, 25.2, 25.3) guidée déplaçable dans un boîtier de guidage linéaire (25.4, 25.5, 25.6).

6. Module de traitement (100) selon l'une quelconque des revendications précédentes, **caractérisé en ce que** le premier dispositif de déplacement (10) et/ou le deuxième dispositif de déplacement (20) comprend un mécanisme à broche (13), en particulier une vis d'entraînement à billes ou une vis d'entraînement à rouleaux, et/ou un mécanisme à courroie dentée (16, 26).

7. Module de traitement (100) selon l'une quelconque des revendications précédentes, **caractérisé en ce que** le premier dispositif de déplacement (10) et/ou le deuxième dispositif de déplacement (20) comporte un système d'actionneur (14, 24) pneumatique, magnétique ou électromoteur, en particulier un système d'actionneur linéaire ou un système d'actionneur rotatif pour générer un mouvement de déplacement, de préférence un actionneur piézoélectrique, un moteur linéaire, un moteur pas à pas, un servomoteur ou un vérin pneumatique.

8. Module de traitement (100) selon l'une quelconque des revendications précédentes, **caractérisé en ce que** le dispositif de positionnement (1) comporte un élément de base (30), en particulier une plaque de base, sur laquelle sont disposés le premier et le deuxième dispositif de déplacement (10, 20).

9. Module de traitement (100) selon l'une quelconque des revendications précédentes, **caractérisé en ce que** le dispositif de positionnement (1) comporte un élément de réception (40), en particulier une plaque de réception, pour recevoir le module de traitement (100), qui peut être déplacée au moyen du premier et du deuxième dispositif de déplacement (10, 20) le long du premier et du deuxième axe (x, z) par rapport au câble à traiter (200).

10. Module de traitement (100) selon l'une quelconque des revendications précédentes, **caractérisé en ce que** le dispositif de positionnement (1) comporte un système de commande pour commander les mouvements de déplacement du premier et du deuxième dispositif de déplacement (10, 20).

11. Machine à traiter les câbles pour confectionner un câble comprenant au moins un module de traitement (100) avec au moins un dispositif de positionnement (1) selon l'une quelconque des revendications précédentes.
